# EUROPEAN PATENT APPLICATION

(11) **EP 2 006 490 A2**
(43) Date of publication of application: **24.12.2008**
(21) Application number: 08252039.6
(22) Date of filing: 13.06.2008
(51) Int. Cl.: F01D 11/00, F16J 15/32

(54) **Brush seal and corresponding manufacturing method**

(30) Priority: 19.06.2007 US 764933
(71) Applicant: United Technologies Corporation, Hartford, CT 06101 (US)
(72) Inventor: Addis, Mark E., Kennebunk, Maine 04043 (US)
(74) Representative: Leckey, David Herbert

(57) **Abstract**

A brush seal assembly (80) is formed of a bristle array (62) receiving at least one housing member (68, 72). Alignment structures (66, 82) are formed on the housing (68) and bristle assembly (62) to ensure that the bristle assembly (80) will be properly positioned in a working environment.

## Description

### BACKGROUND OF THE INVENTION

This application relates to a brush seal, such as is used in turbine engines, wherein an assembly aid ensures seal bristles are properly positioned when assembled to a housing.

Brush seals are utilized to block the flow of gases or other fluids in many applications. One common application is in a turbine engine. As known, a turbine engine, such as a gas turbine engine, includes a compressor for compressing air and delivering it downstream into a combustion section. The air is mixed with fuel in the combustion section and burned. Products of this combustion then pass over turbine rotors, which are driven to rotate.

Several locations along this assembly require sealing to direct the various fluid flows in proper directions. One known seal type is a brush seal. In a known brush seal, a bristle array is mounted between an upstream housing and a downstream housing. The housings provide some structural rigidity to the bristles and also mount the seal assembly in a housing. The bristles in the array have a proper orientation relative to a flow direction, in that the bristles extend at an angle which is common with a direction of rotation of a part against which the brush seal seals. Thus, there is a desired orientation for the bristle array, and a desired side of the bristle array which is to receive the upstream housing and a side which receives the downstream housing. Unfortunately, in the prior art, the housings have sometimes been mounted to the improper side of the bristle array. When this occurs, the bristle array may be improperly mounted, causing a shorter life and a less effective seal than would be desirable.

### SUMMARY OF THE INVENTION

In the disclosed embodiment of this invention, a bristle array and at least one housing have corresponding structure such that the bristle array is mounted to the housing in the correct orientation. In this manner, it is most unlikely that the bristle array would be improperly mounted to its housing. Thus, it is properly mounted when placed in the field. In one embodiment, there is an upstream housing and a downstream housing, and one of these housings has a recess for receiving an alignment member attached to the bristle array.

These and other features of the present invention can be best understood from the following specification and drawings, the following of which is a brief description.

### BRIEF DESCRIPTION OF THE DRAWINGS

Figure 1 is a schematic view of a gas turbine engine.
Figure 2 shows a prior art seal.
Figure 3A is a perspective view of a portion of an inventive seal.
Figure 3B shows a first embodiment.
Figure 3C shows a second embodiment.
Figure 3D shows a third embodiment.
Figure 3E shows a fourth embodiment.
Figure 4 shows the first embodiment of the present invention mounted in an operative environment.

### DETAILED DESCRIPTION OF THE PREFERRED EMBODIMENT

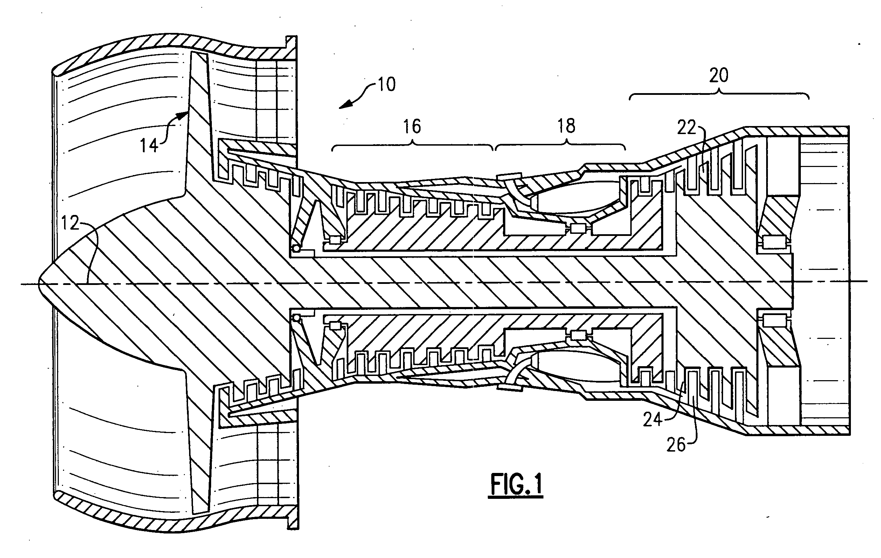

A gas turbine engine 10, such as a turbofan gas turbine engine, circumferentially disposed about an engine centerline, or axial centerline axis 12 is shown in Figure 1. The engine 10 includes a fan 14, a compressor 16, a combustion section 18 and a turbine 20. As is well known in the art, air compressed in the compressor 16 is mixed with fuel which is burned in the combustion section 18 and expanded in turbine 20. The turbine 20 includes rotors 22 which rotate in response to the expansion, driving the compressor 16 and fan 14. The turbine 20 comprises alternating rows of rotary airfoils or blades 24 and static airfoils or vanes 26. This structure is shown somewhat schematically in Figure 1. While a particular turbine engine is shown, it should be understood that this invention extends to all turbines for any application.

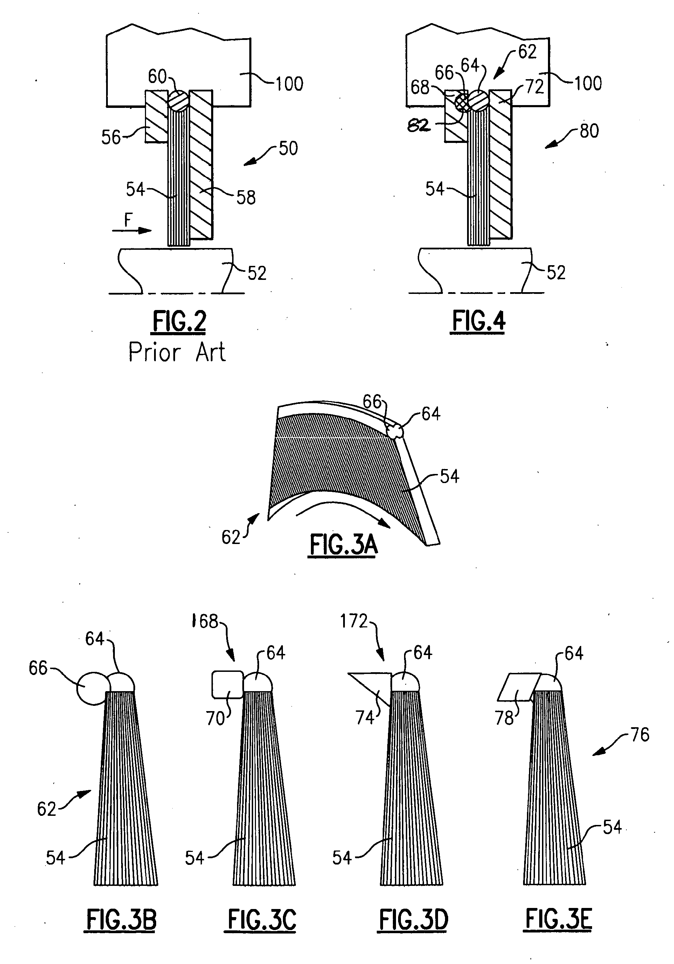

At several locations along the gas turbine as shown in Figure 1, brush seals such as shown at 50 in Figure 2 may be utilized. As shown, the brush seal 50 seals against a rotating shaft 52. The seal can seal against other rotating components, such as a rotor. Further, the seal can also seal between two fixed components. The locations for using such seals are generally as known. A bristle array 54 is sandwiched between an upstream housing 56 and a downstream housing 58 to provide rigidity to the bristle array. A weld bead 60 secures the bristles together into the array. The bristle array is then secured to the upstream housing 56 and downstream housing 58, and the entire brush seal 50 may then be mounted within the gas turbine engine such as at housing 100. The mounting to housing 100 is shown schematically and forms no part of this invention.

As can be appreciated from Figure 3A, the bristle array 54 has bristles which extend along a direction which is in the same direction as the direction of the rotation of the part 52 which is to mount the brush seal. That is, the bristles extend inwardly at an angle that is not perpendicular to axis 12. Thus, there is a desired orientation or upstream end and downstream end for the bristle array such as shown in Figure 2. In the past, it is sometimes been the case that the upstream housing 56 has been mounted to the wrong face of the bristle array 54 as has been the downstream housing 58. When this occurs the brush assembly 50 will then be mounted facing in the wrong direction within the gas turbine engine, or other application. As mentioned above, this is undesirable.

Returning to Figure 3A, an inventive bristle array 62 is illustrated. As shown, the typical weld bead 64 secures the bristles into the bristle array 54. However, an alignment feature 66 is also added. As shown in Figure 3B, the alignment feature 66 may be generally circular. As shown in Figure 3C, the bristle array 168 may have an alignment feature 70 which is generally rectangular. As shown in Figure 3D, the bristle array 172 may have an alignment feature 74 which is generally triangular. As shown in Figure 3E, the bristle array 76 may have an alignment feature 78 which is generally a trapezoid. Many other shapes can be utilized. The alignment feature can be formed of a material similar to bead 64.

As shown in Figure 4, when assembling the brush assembly 80 including the inventive bristle array 62, the alignment structure 66 is received in a recess 82 in a housing 68. Of course, the recess could be formed in the other housing 72. In addition, the recess could be formed in the weld bead 64, with the alignment structure formed in one of the housings 68. All that is required there be some corresponding structure in the bristle array and at least one of the housings that ensures the housing will be assembled to the proper face of the bristle array 62.

In the disclosed embodiment, the alignment feature 66, and hence the recess 82, extend across the entire circumference of the brush assembly. However, as can be appreciated, circumferentially spaced partial alignment features may be sufficient.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A brush seal assembly (80) comprising:
a bristle array (62; 168; 172; 76), with said bristle array having bristles extending at a non-perpendicular angle relative to a central axis of said bristle array; and
at least one housing (68; 72) secured to said bristle array, there being mating alignment structure (82; 66; 70; 74; 78) on each of said bristle array (62; 168; 172; 76) and on said at least one housing (68; 72) to ensure said at least one housing (68; 72) is positioned on a desired face of said bristle array (62; 168; 172; 76) to ensure that the angle of the bristles will be proper when the brush seal assembly (80) is mounted in a working environment.

2. The brush seal assembly as set forth in Claim 1, wherein said at least one housing includes an upstream housing (68) and a downstream housing (70), with at least one of said upstream and downstream housings having said alignment structure.

3. The brush seal assembly as set forth in Claim 1 or 2, wherein said alignment structure includes an alignment member (66; 70; 74; 78) mounted onto said bristle array (62; 168; 172; 76), and a corresponding recess (82) formed in said at least one housing (68; 70).

4. The brush seal assembly as set forth in Claim 3, wherein said alignment structure is a welded member (66; 70; 74; 78) welded to a weld bead (64) which secures the bristles of said bristle array (62; 168; 172; 76) together.

5. A gas turbine engine (10) comprising:
a compressor section (16) for delivering air to a combustion section (18), said combustion section (18) mixing the air with the fuel and combusting the combined mixture, a turbine section (20) downstream of the combustion section (18); and
a brush seal assembly (80) for sealing at least one surface (52) in the gas turbine engine (10), the brush seal assembly including a bristle array (62; 168; 172; 76), with said bristle array having bristles extending at a non-perpendicular angle relative to a central axis of said gas turbine engine (10), and at least one housing (68; 72) secured to said bristle array (62; 168; 172; 76), there being mating alignment structure (82; 66; 70; 74; 78) on each of said bristle array (62; 168; 172; 76) and on said at least one housing (68; 72) to ensure said at least one housing (68; 72) is positioned on a desired face of said bristle array (62; 168; 172; 76) to ensure that the angle of the bristles will be proper relative to a rotational direction within said gas turbine engine (10).

6. The gas turbine engine as set forth in Claim 5, wherein said at least one housing includes an upstream housing (68) and a downstream housing (72), with at least one of said upstream and downstream housings (68, 72) having said alignment structure.

7. The gas turbine engine as set forth in Claim 5 or 6, wherein said alignment structure includes an alignment member (66; 70; 74; 78) mounted onto said bristle array (62; 168; 172; 76), and a corresponding recess (82) formed in said at least one housing (68; 72).

8. The gas turbine engine as set forth in Claim 7, wherein said alignment structure is a welded member (66; 70; 74; 78) welded to a weld bead (64) which secures the bristles of said bristle array (62; 168; 172; 76) together.

9. A method of assembling a brush seal assembly (80) comprising the steps of:
providing a bristle array (62; 168; 172; 76), with said bristle array having bristles extending at a non-perpendicular angle relative to a central axis of said bristle array;
providing alignment structure (82; 66; 70; 74; 78) on each of said bristle array and on at least one housing; and
assembling said bristle array (62; 168; 172; 76) to said at least one housing (68, 72) utilizing said alignment structure (82; 66; 70; 74; 78) to ensure said at least one housing (68; 72) is positioned on a desired face of said bristle array (62; 168; 172; 76) to ensure that the angle of the bristles will be proper when the brush seal assembly (80) is mounted in a working environment.

10. The method as set forth in Claim 9, wherein an upstream housing (68) and a downstream housing (72) are provided with at least one of said upstream and downstream housings (68, 72) having said alignment structure, and securing said upstream and downstream (68, 72) housings to said bristle array.

11. The method as set forth in Claim 9 or 10, wherein said alignment structure includes an alignment member (66, 70; 74; 78) mounted onto said bristle array (62; 168, 172; 76), and a corresponding recess (82) formed in said at least one housing (68; 72), and aligning said alignment member into said recess.

12. The method as set forth in Claim 11, wherein said alignment member (66; 70; 74; 78) is a welded member welded to a weld bead (64) which secures the bristles of said bristle array (62; 168; 172; 76) together.
